(19) Europäisches Patentamt
European Patent Office
Office européen des brevets

(11) EP 4 056 370 A1

(12) EUROPEAN PATENT APPLICATION
published in accordance with Art. 153(4) EPC

(43) Date of publication:
**14.09.2022 Bulletin 2022/37**

(21) Application number: **20886044.5**

(22) Date of filing: **02.11.2020**

(51) International Patent Classification (IPC):
***B32B 27/30*** *(2006.01)* ***C08F 301/00*** *(2006.01)*
***C09D 127/12*** *(2006.01)* ***C09D 7/20*** *(2018.01)*
***H01Q 1/02*** *(2006.01)* ***H01Q 1/42*** *(2006.01)*
***C08J 7/04*** *(2020.01)*

(52) Cooperative Patent Classification (CPC):
**B32B 27/30; C08F 301/00; C08J 7/04; C09D 7/20; C09D 127/12; C09D 201/04; C09K 3/18; H01Q 1/02; H01Q 1/42**

(86) International application number:
**PCT/JP2020/041108**

(87) International publication number:
**WO 2021/090812 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2019 JP 2019201080**

(71) Applicant: **Daikin Industries, Ltd.**
**Osaka-shi, Osaka 530-8323 (JP)**

(72) Inventors:
- **MORITA, Masamichi**
**Osaka-shi, Osaka 530-8323 (JP)**
- **YAMAGUCHI, Hiroki**
**Osaka-shi, Osaka 530-8323 (JP)**
- **SAKAKURA, Atsushi**
**Osaka-shi, Osaka 530-8323 (JP)**
- **HOSODA, Kazuki**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) ANTENNA COVER BASE MATERIAL

(57) An object of the present disclosure is to provide an antenna cover base material that is coated with a fluoropolymer-containing film and that has excellent durability of water sliding. The present disclosure pertains to an antenna cover base material coated with a fluoropolymer-containing film, the film having the properties of a water sliding velocity of 150 mm/s or more at an inclination angle of 30°, and an average surface roughness (Ra) of 1 $\mu$m or less.

EP 4 056 370 A1

## Description

### Technical Field

The present disclosure relates to an antenna cover base material, an antenna cover comprising the base material, a coating agent for coating the antenna cover base material, and a method for evaluating water slidability of the film.

### Background Art

Antennas used for cellular phone base stations etc. are generally installed outdoors, such as on the roof of apartment buildings, and are exposed to rain etc. Such water adhesion tends to cause problems such as transmission loss and diffusion in propagation of electromagnetic waves. Accordingly, antennas used outdoors are often protected by antenna covers, and the antenna covers are also required to reduce water adhesion.

Use of water-repellent materials is expected to reduce water adhesion. Non-Patent Literature (NPL) 1 states that dynamic liquid repellency can be enhanced by controlling the fluoroalkyl group chain length or the molecular structure at the $\alpha$-position of a fluoroacrylate polymer, which is a typical liquid-repellent material. However, there is a problem that the water slidability after immersion in water is significantly reduced.

When higher dynamic liquid repellency than that of a fluoroacrylate polymer coating is required, the use of a "super-water-repellent surface" (a surface having a contact angle of 150° or more), which has a lotus leaf effect mainly obtained by controlling surface roughness, is considered. However, there is a problem that PM2.5, dust, mud, etc. that enter recesses in the fine uneven surface significantly reduce water slidability.

### Citation List

#### Non-patent Literature

NPL 1: "Dynamic Liquid Repellency of Fluoroacrylate Homopolymers," Polymer, 60(12), pp. 870-871, 2011

### Summary of Invention

#### Technical Problem

One object of the present disclosure is to provide an antenna cover base material coated with a film comprising a fluoropolymer. Another object of the present disclosure is to provide an antenna cover. A further object of the present disclosure is to provide a coating agent for coating an antenna cover base material. Yet another object of the present disclosure is to provide a method for evaluating water slidability of a film.

#### Solution to Problem

The present disclosure includes the following embodiment.

Item 1. An antenna cover base material coated with a film comprising a fluoropolymer, the film having the following properties:

a sliding velocity of 150 mm/s or more at an inclination angle of 30°; and
an average surface roughness (Ra) of 1 $\mu$m or less.

Item 2. The antenna cover base material according to Item 1, wherein the film further has the following property: a contact angle of 100° to 130°.
Item 3. The antenna cover base material according to Item 1 or 2, wherein the film further has the following property: a total light transmittance of 90% or more.
Item 4. The antenna cover base material according to any one of Items 1 to 3, wherein the film further has the following property: a sliding angle of 15° or less.
Item 5. The antenna cover base material according to any one of Items 1 to 4, wherein the film has an average film thickness of 10 nm or more.
Item 6. The antenna cover base material according to any one of Items 1 to 5, wherein the fluoropolymer has a glass transition temperature (Tg) of 100°C or more.

Item 7. The antenna cover base material according to any one of Items 1 to 6, wherein the fluoropolymer contains as a main component a monomer unit containing a 4-, 5-, 6-, or 7-membered fluorine-containing aliphatic ring, and the fluorine-containing aliphatic ring contains one, two, or three etheric oxygen atoms as ring-constituting atoms; and when the fluorine-containing aliphatic ring contains a plurality of etheric oxygen atoms, the etheric oxygen atoms are not adjacent to each other.

Item 8. The antenna cover base material according to any one of Items 1 to 7, wherein the fluoropolymer contains, as a main component, a monomer unit represented by formula (1):

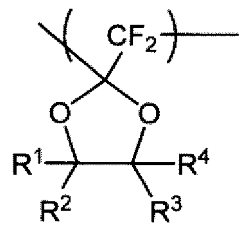

(1)

wherein $R^1$ to $R^4$ are each independently fluorine, fluoroalkyl, or fluoroalkoxy.

Item 9. The antenna cover base material according to any one of Items 1 to 8, wherein the film has a total water score of 100 or more in evaluation of water slidability of the film with the immersion time being set to 24 hours, 72 hours, and 120 hours, and the water temperature during immersion being set to 20°C to 25°C.

Item 10. An antenna cover comprising the antenna cover base material of any one of Items 1 to 9.

Item 11. A coating agent for coating an antenna cover base material, the coating agent comprising a fluoropolymer and an aprotic solvent, the fluoropolymer containing as a main component a monomer unit containing a 4-, 5-, 6-, or 7-membered fluorine-containing aliphatic ring, wherein the fluorine-containing aliphatic ring of the fluoropolymer has one, two, or three etheric oxygen atoms as ring-constituting atoms; and when the fluorine-containing aliphatic ring contains a plurality of etheric oxygen atoms, the etheric oxygen atoms are not adjacent to each other.

Item 12. The coating agent according to Item 12, wherein the fluoropolymer contains as a main component a monomer unit represented by formula (1):

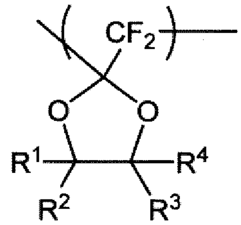

(1)

(wherein $R^1$ to $R^4$ are each independently fluorine, fluoroalkyl, or fluoroalkoxy).

Item 13. The coating agent according to Item 11 or 12, wherein the aprotic solvent is at least one solvent selected from the group consisting of perfluoroaromatic compounds, perfluorotrialkylamines, perfluoroalkanes, hydrofluorocarbons, perfluorocyclic ethers, and hydrofluoroethers.

Item 14. The coating agent according to any of Items 11 to 13, wherein the aprotic solvent is at least one hydrofluoroether.

Item 15. A method for evaluating water slidability of a film by immersing a base plate having one surface coated with the film, the method comprising the following steps as a set of measurements:

step A: a step of measuring the sliding velocity of water droplets on the film before immersing the base plate in water (SVs);

step B: a step of immersing the base plate in water for 1 to 240 hours and measuring the sliding velocity of water droplets on the film of the immersed base plate immediately after removing the base plate from the water (SVw);

step C: a step of drying the immersed base plate at 10°C to 40°C for 12 hours to 7 days and measuring the sliding velocity of water droplets on the film of the dried base plate (SVd);

step D: a step of heating the dried base plate at 100°C to 200°C for 1 to 20 minutes and measuring the sliding velocity of water droplets on the film of the heated base plate (SVra); and

step F: a step of calculating the water score of the film by the following mathematical formula (F):

$$\text{Water score} = 100 \times [(SVw/SVs) + (SVd/SVs) + (SVra/SVs)] \quad (F);$$

wherein the set of measurements can be performed n times, wherein n is an integer or 1 or more, and when n is two or more, a new base plate is used for each set of measurements.

Item 16. The method according to Item 15, wherein n is an integer of 2 or more, and the method further comprises step G: a step of calculating, as the total water score, the sum of the water scores calculated for each set of measurements from the first set to the $n^{th}$ set of measurements.

Item 17. The method according to Item 15 or 16, wherein the set of measurements is performed 3 to 100 times, and the immersion time of at least three immersion treatments out of 3 to 100 immersion treatments performed in step B is 20 to 30 hours, 70 to 80 hours, and 100 to 140 hours.

Advantageous Effects of Invention

The present disclosure can provide an antenna cover base material coated with a film in which the decrease in sliding velocity after immersion in water is suppressed. Further, according to the present disclosure, an antenna cover comprising the base material can be provided. According to the present disclosure, a coating agent for forming the film can be provided. According to the present disclosure, a method for evaluating sliding on the film when the film is exposed to water (water slidability) can be provided.

Description of Embodiments

The above summary of the present disclosure is not intended to describe each disclosed embodiment or every implementation of the present disclosure.

The description of the present disclosure that follows more specifically provides examples of illustrative embodiments.

In several places throughout the present disclosure, guidance is provided through lists of examples, and these examples can be used in various combinations.

In each instance, the provided list serves only as a representative group and should not be interpreted as an exclusive list.

All publications, patents, and patent applications cited herein are incorporated herein by reference in their entirety.

Terms

Unless otherwise specified, the symbols and abbreviations used in this specification can be assumed to have their ordinary meanings used in the technical field to which the present invention pertains, as understood from the context of the specification.

The terms "containing" and "comprising" as used herein are intended to include the meanings of the phrase "consisting essentially of" and the phrase "consisting of."

Unless otherwise specified, the steps, treatments, or operations described in the present specification can be performed at room temperature. In the present specification, room temperature can refer to a temperature within the range of 10 to 40°C.

In the present specification, the phrase "$C_n$-$C_m$" (wherein n and m are each a number) indicates that the number of carbon atoms is n or more and m or less, as a person skilled in the art would generally understand.

Unless otherwise specified, the "contact angle" as referred to herein can be measured using a commercially available contact angle meter, such as a DropMaster-series contact angle meter, manufactured by Kyowa Interface Science Co., Ltd., in accordance with the method disclosed in the section "4.1 Droplet Method" in "Method for Evaluating Water Repellency" (Koyo Fukuyama, Surface Technology, vol. 60, No. 1, 2009, pp. 21-26; also simply referred to below as "Method for Evaluating Water Repellency"). Specifically, the contact angle is determined by the method described in a specific example of the present disclosure.

The "sliding angle" as referred to herein means an inclination angle of the substrate at which water droplets start rolling down on the substrate. Unless otherwise specified, the sliding angle can be determined by using a commercially available contact angle meter, such as a DropMaster-series contact angle meter, manufactured by Kyowa Interface Science Co., Ltd., in accordance with the method disclosed in the section "4.3 Sliding Method (Measurement on a slope)" in "Method for Evaluating Water Repellency." Specifically, the sliding angle is a value determined by a method described in a specific example of the present disclosure.

The "sliding velocity" as referred to herein means a speed at which a 20 μL of water droplets roll down on the film coating of a substrate tilted at an inclination angle of 30°. Unless otherwise specified, the sliding velocity can be determined by using a commercially available contact angle meter, such as a DropMaster-series contact angle meter, manufactured by Kyowa Interface Science Co., Ltd., in accordance with the method disclosed in the section "4.4 Dynamic Sliding Method" in "Method for Evaluating Water Repellency." Specifically, the sliding velocity is a value determined by a method described in a specific example of the present disclosure.

Unless otherwise specified herein, the "average surface roughness" is determined by "arithmetic mean roughness" (Ra). Ra is a value obtained in the following manner. From a roughness curve, a portion of the roughness curve with a reference length in the direction of the average line is extracted. When the direction of the average line of the extracted portion is on the X-axis, and the direction of the vertical magnification is on the Y-axis, the roughness curve is represented by y = f(x). The value obtained by the following formula:

$$Ra = \frac{1}{\ell} \int_0^{\ell} \{f(x)\} dx$$

and expressed in micrometers (μm) is Ra. Specifically, the average surface roughness is a value determined by the method described in a specific example of the present disclosure.

The "transmittance" referred to herein means the total light transmittance of a film having an average film thickness of 200 μm using an NDH 7000SPII haze meter (produced by Nippon Denshoku Industries Co., Ltd.) in accordance with JIS K 7375:2008 "Plastics - Determination of the total luminous transmittance of transparent materials." Specifically, the transmittance is determined by the method described in a specific example of the present disclosure.

Unless otherwise specified herein, the "glass transition temperature" can be measured in accordance with the "Midpoint Glass Transition Temperature (Tmg)" in JIS K7121: 2012 "Method for Measuring Transition Temperature of Plastic." Specifically, the glass transition temperature is a value determined by the method described in a specific example of the present disclosure.

Unless otherwise specified, the "average film thickness" as referred to herein can be determined by a method of measuring the cross-section of a film cut with a utility knife by using an atomic force microscope (AFM). Specifically, the average film thickness is a value determined by a method described in a specific example of the present disclosure.

In the present specification, the "water score" refers to a value obtained by subjecting a base plate coated with a film, which is the target of measurement, to a method of evaluating water slidability of the film when the base plate coated with the film is immersed in water (e.g., water temperature: 10°C to 40°C) for a predetermined time (e.g., 1 to 240 hours) and calculating the score in step F. In other words, the "total water score" is a value calculated in step F for each set of measurements by the following method.

A method for evaluating water slidability of a film by immersing a base plate having one surface coated with the film, the method comprising the following steps as a set of measurements:

step A: a step of measuring the sliding velocity of water droplets on the film before immersing the base plate in water (SVs);
step B: a step of immersing the base plate in water for 1 to 240 hours and measuring the sliding velocity of water droplets on the film of the immersed base plate immediately after removing the base plate from the water (SVw);
step C: a step of drying the immersed base plate at 10°C to 40°C for 12 hours to 7 days and measuring the sliding velocity of water droplets on the film of the dried base plate (SVd);
step D: a step of heating the dried base plate at 100°C to 200°C for 1 to 20 minutes and measuring the sliding velocity of water droplets on the film of the heated base plate (SVra); and
step F: a step of calculating the water score of the film by the following mathematical formula (F):

$$\text{Water score} = 100 \times [(SVw/SVs) + (SVd/SVs) + (SVra/SVs)] \qquad (F);$$

wherein the set of measurements can be performed n times, wherein n is an integer or 1 or more, and when n is two or more, a new base plate is used for each set of measurements.

The water score can be determined by the method described in a specific example of the present disclosure. When the "water score" of the antenna cover material of the present disclosure is specified, the water score refers to a value calculated for a set of measurements according to the method of the present disclosure in which the water temperature is set to 20°C to 25°C, and the immersion time in step B is the predetermined time (e.g., 24 hours, 72 hours, 120 hours), and the drying temperature and drying time in step C are 20°C to 25°C for 3 to 7 days, and the heating

treatment in step D is performed in a 180°C thermostatic container for 10 minutes.

The preferred water score is a value calculated under the following conditions.

Water temperature during immersion: 20°C to 25°C
Immersion time: 24, 72, or 120 hours
Drying temperature: 20°C to 25°C
Drying time: 3 to 7 days (more preferably 4 days (immersion time: 24 hours), 3 days (immersion time: 72 hours), and 7 days
(immersion time: 120 hours)
Heat treatment: in a 180°C thermostatic container for 10 minutes
n: 1 or more (preferably 1 to 4, more preferably 2 to 4, particularly preferably 3; when n is 2 or more, the average value calculated by dividing the sum of the water scores calculated for each set of measurements by n is preferably used).

When the sliding velocity of water droplets on a plurality of base plates coated with the same film is measured, the water score can be calculated for each base plate.

Alternatively, when the sliding velocity of water droplets on a plurality of base plates coated with the same film is measured, the sliding velocity of water droplets on each base plate can be summed and divided by the number of the base plates to obtain the average value as the sliding velocity of water droplets, and the water score can be calculated from the average value. For example, if the sliding velocity of water droplets on two base plates before immersion is defined as "a" and "b" (mm/s), the "sliding velocity of water droplets on the film before immersion in water (SVs)" is a value calculated according to the formula: (a + b)/2. The same applies to the sliding viscosity of water droplets on the film of the immersed base plate (SVw), the sliding velocity of water droplets on the film of the dried base plate (SVd), and the sliding velocity of water droplets on the film of the heat-treated base plate (SVra).

In the present specification, the "water score" refers to a value obtained by subjecting a base plate coated with a film, which is the target of measurement, to a method of evaluating water slidability of the film when the base plate coated with the film is immersed in water for a predetermined time and calculating the score in step G. In other words, the "total water score" is the "total water score" is the sum of the "water scores" calculated in step (F) for each set of measurements.

A method for evaluating water slidability of a film by immersing a base plate having one surface coated with the film (e.g., water temperature: 10°C to 40°C), the method comprising the following steps as a set of measurements:

step A: a step of measuring the sliding velocity of water droplets on the film before immersing the base plate in water (SVs);
step B: a step of immersing the base plate in water for 1 to 240 hours and measuring the sliding velocity of water droplets on the film of the immersed base plate immediately after removing the base plate from the water (SVw);
step C: a step of drying the immersed base plate at 10°C to 40°C for 12 hours to 7 days and measuring the sliding velocity of water droplets on the film of the dried base plate (SVd);
step D: a step of heating the dried base plate at 100°C to 200°C for 1 to 20 minutes and measuring the sliding velocity of water droplets on the film of the heated base plate (SVra); and
step F: a step of calculating the total score of the film according to the following mathematical formula (F):

$$\text{Water score} = 100 \times [(SVw/SVs) + (SVd/SVs) + (SVra/SVs)] \qquad (F);$$

wherein the set of measurements can be performed n times, wherein n is an integer or 1 or more, and when n is two or more, a new base plate is used for each set of measurements;
when n is an integer of 2 or more, the method further comprises

step G: a step of calculating, as the total water score, the sum of the water scores calculated for each set of measurements from the first set to the $n^{th}$ set of measurements.

The total water score is more specifically determined by the methods described in a specific example of the present disclosure. When the "total water score" of the antenna cover material of the present disclosure is specified, the water score refers to a value calculated by the method of the present disclosure in which the water temperature is set to 20°C to 25°C, n is 3, and the immersion time in step B, which is performed three times, is set to be 24 hours, 72 hours, and 120 hours, and the drying temperature in step C is set to 20°C to 25°C, the drying time in step C is set to be 4 days (immersion time: 24 hours), 3 days (immersion time: 72 hours), and 7 days (immersion time: 120 hours), and the heat

treatment in step D is performed by heating on a 180°C hot plate for 10 minutes.

The total water score calculated in this case is, for example, 100 or more, 120 or more, or 150 or more. In terms of suppressing the decrease of the sliding velocity, the total water score is preferably 170 or more, more preferably 180 or more, and even more preferably 200 or more.

When the sliding velocity of water droplets on base plates coated with the same film is measured, the sliding velocity of water droplets determined using each plate is preferably summed and divided by the number of the base plates to obtain the average value. For example, if the sliding velocity of water droplets on each of two base plates before immersion is defined as "a" and "b" (mm/s), the "sliding velocity of water droplets on the film before immersion in water (SVs)" is a value calculated according to the formula: (a + b)/2. The same applies to the sliding viscosity of water droplets on the film of the immersed base plate (SVw), the sliding velocity of water droplets on the film of the dried base plate (SVd), and the sliding velocity of water drops on the film of the heat-treated base plate (SVra).

In the present specification, unless otherwise specified, the "fluorine-containing aliphatic ring" contains a plurality of carbon atoms and one, two, or three etheric oxygen atoms as ring-constituting atoms. When the "fluorine-containing aliphatic ring" contains a plurality of oxygen atoms as ring-constituting atoms, the oxygen atoms are not adjacent to each other.

The "fluorine-containing aliphatic ring" includes a saturated aliphatic monocyclic ring containing one or more fluorine atoms.

The "fluorine-containing aliphatic ring" includes a ring of four or more members (e.g., a 4-membered ring, a 5-membered ring, a 6-membered ring, or a 7-membered ring).

The "fluorine-containing aliphatic ring" may have at least one group selected from the group consisting of perfluoroalkyl (e.g., $C_1$-$C_5$ linear or branched perfluoroalkyl) and perfluoroalkoxy (e.g., $C_1$-$C_5$ linear or branched perfluoroalkoxy) as a substituent. The number of substituents can be one or more, such as one to four, one to three, one to two, one, two, three, or four.

In the "fluorine-containing aliphatic ring," one or more fluorine atoms can be attached to one or more ring-constituting carbon atoms.

Examples of the "fluorine-containing aliphatic ring" include perfluorooxetane optionally having one or more substituents, perfluorotetrahydrofuran optionally having one or more substituents, perfluorodioxolane optionally having one or more substituents, perfluorotetrahydropyran optionally having one or more substituents, perfluoro-1,3-dioxane optionally having one or more substituents, perfluorooxepane optionally having one or more substituents, perfluoro-1,3-dioxepane optionally having one or more substituents, perfluoro-1,4-dioxepane optionally having one or more substituents, and perfluoro-1,3,5-trioxepane optionally having one or more substituents.

In the present specification, unless otherwise specified, examples of "alkyl" include linear or branched $C_1$-$C_{10}$ alkyl, such as methyl, ethyl, propyl, isopropyl, butyl, isobutyl, sec-butyl, tert-butyl, pentyl, isopentyl, neopentyl, hexyl, heptyl, octyl, nonyl, and decyl.

In the present specification, unless otherwise specified, "fluoroalkyl" is alkyl in which at least one hydrogen atom is replaced with a fluorine atom. "Fluoroalkyl" can be linear or branched fluoroalkyl.

The number of carbon atoms in "fluoroalkyl" can be, for example, 1 to 12, 1 to 6, 1 to 5, 1 to 4, 1 to 3, 6, 5, 4, 3, 2, or 1. The number of fluorine atoms in "fluoroalkyl" can be 1 or more (e.g., 1 to 3, 1 to 5, 1 to 9, 1 to 11, or 1 to the maximum substitutable number).

"Fluoroalkyl" includes perfluoroalkyl.

"Perfluoroalkyl" is alkyl in which all of the hydrogen atoms are replaced with fluorine atoms.

Examples of perfluoroalkyl include trifluoromethyl ($CF_3$-), pentafluoroethyl ($C_2F_5$-), heptafluoropropyl ($CF_3CF_2CF_2$-), and heptafluoroisopropyl ($(CF_3)_2CF$-).

Specific examples of "fluoroalkyl" include monofluoromethyl, difluoromethyl, trifluoromethyl ($CF_3$-), 2,2,2-trifluoroethyl ($CF_3CH_2$-), perfluoroethyl ($C_2F_5$-), tetrafluoropropyl (e.g., $HCF_2CF_2CH_2$-), hexafluoropropyl (e.g., $(CF_3)_2CH$-), perfluorobutyl (e.g., $CF_3CF_2CF_2CF_2$-), octafluoropentyl (e.g., $HCF_2CF_2CF_2CF_2CH_2$-), perfluoropentyl (e.g., $CF_3CF_2CF_2CF_2CF_2$-), perfluorohexyl (e.g., $CF_3CF_2CF_2CF_2CF_2CF_2$-), and the like.

In the present specification, unless otherwise specified, "alkoxy" can be a group represented by RO-, wherein R is alkyl (e.g., $C_1$-$C_{10}$ alkyl) .

Examples of "alkoxy" include linear or branched $C_1$-$C_{10}$ alkoxy, such as methoxy, ethoxy, propoxy, isopropoxy, butoxy, isobutoxy, sec-butoxy, tert-butoxy, pentyloxy, isopentyloxy, neopentyloxy, hexyloxy, heptyloxy, octyloxy, nonyloxy, and decyloxy.

In the present specification, unless otherwise specified, "fluoroalkoxy" is alkoxy in which at least one hydrogen atom is replaced by a fluorine atom. "Fluoroalkoxy" can be linear or branched fluoroalkoxy.

The number of carbon atoms in "fluoroalkoxy" can be, for example, 1 to 12, 1 to 6, 1 to 5, 1 to 4, 1 to 3, 6, 5, 4, 3, 2, or 1.

The number of fluorine atoms in "fluoroalkoxy" can be 1 or more (e.g., 1 to 3, 1 to 5, 1 to 9, 1 to 11, or 1 to the maximum substitutable number).

"Fluoroalkoxy" includes perfluoroalkoxy.

"Perfluoroalkoxy" is alkoxy in which all of the hydrogen atoms are replaced with fluorine atoms.

Examples of "perfluoroalkoxy" include trifluoromethoxy ($CF_3O$-), pentafluoroethoxy ($C_2F_5O$-), heptafluoropropoxy ($CF_3CF_2CF_2O$-), and heptafluoroisopropoxy (($CF_3)_2CFO$-).

Specific examples of "fluoroalkoxy" include monofluoromethoxy, difluoromethoxy, trifluoromethoxy, 2,2,2-trifluoroethoxy ($CF_3CH_2O$-), perfluoroethoxy ($C_2F_5O$-), tetrafluoropropyloxy (e.g. $HCF_2CF_2CH_2O$-), hexafluoropropyloxy (e.g., ($CF_3)_2CHO$-), perfluorobutyloxy (e.g., $CF_3CF_2CF_2CF_2O$-), octafluoropentyloxy (e.g., $HCF_2CF_2CF_2CF_2CH_2O$-), perfluoropentyloxy (e.g., $CF_3CF_2CF_2CF_2CF_2O$-), perfluorohexyloxy (e.g., $CF_3CF_2CF_2CF_2CF_2CF_2O$-), and the like.

## Antenna Covers

One embodiment of the present disclosure is an antenna cover comprising the antenna cover base material described below. The antenna cover can generally be a cover used to protect antennas that are mainly installed outdoors, such as cell phone base stations, from wind, rain, snow, and the like.

Examples of antennas to which the antenna cover of the present disclosure is applied include, but are not limited to, antennas installed at cell phone base stations, TV relay stations, or radio relay stations, vehicle-mounted antennas, marine antennas, and the like.

The antenna cover of the present disclosure, which comprises an antenna cover base material, is coated on at least part of the outer surface with the film comprising a fluoropolymer, and can exhibit high water droplet slidability over a long period of time.

The matters that could be understood by a person skilled in the art from the description of the antenna cover base material below and based on common technical knowledge and that are applicable to antenna covers can be applied to the antenna cover of the present disclosure.

## Antenna Cover Base Material

One embodiment of the present disclosure is an antenna cover base material coated with the film comprising a fluoropolymer. An antenna cover base material is generally a component of cellular phone base station antenna covers, TV dish antenna covers, on-vehicle communication antenna covers, ship communication antenna covers, aircraft communication antenna covers, and the like. The antenna cover base material can be a component that constitutes the surface of an antenna cover. Since at least part or all of the outer surface of the antenna cover base material of the present disclosure is coated with a film comprising a fluorine polymer, high water droplet slidability can be exhibited over a long period of time.

The matters that could be understood by a person skilled in the art from the above description of the antenna cover base material and based on common technical knowledge and that are applicable to antenna cover base materials can be applied to the antenna cover base material of the present disclosure.

The sliding velocity of 20 μL of water droplets on the film at an inclination angle of 30° can be 150 mm/s or more, and the film can have an average surface roughness (Ra) of 1 μm or less. Although the surface of the film has a low average surface roughness of less than 1 μm, water droplets tend to slide down very easily at a high sliding velocity. The film is advantageous as a coating film for an antenna cover base material because a high sliding velocity on the film prevents water from adhering to the film. Further, the film has high water resistance. ("Water resistance" as used herein means that a decrease in sliding velocity of water droplets on a film after immersion in water is suppressed, and this term is synonymous with "water slidability.") For example, in evaluation of the total water score in which the immersion time is set to 24 hours, 72 hours, and 120 hours, the film can have a total water score of 100 or more, preferably 120 or more, and more preferably 200 or more; therefore, the film is advantageous as a coating film for an antenna cover base material for antennas that are installed in environments in which they are exposed to water over a long period of time, such as outdoors in the rain.

Dynamic water repellency can be defined according to the contact angle, sliding angle, sliding velocity, etc., among which, the sliding velocity is particularly important. On the other hand, a "super-water-repellent surface" is generally defined as a surface with a contact angle of 150° or more, i.e., a surface that repels water droplets well on the spot.

The sliding velocity (inclination angle: 30°) of the film is, for example, 150 mm/s or more or 150 mm/s to 250 mm/s, preferably 160 mm/s to 250 mm/s, and more preferably 170 mm/s to 250 mm/s.

The average surface roughness (Ra) of the film is, for example, 1 μm or less, or 0.1 μm to 1 μm, preferably 0.1 μm to 0.7 μm, more preferably 0.1 μm to 0.7 μm, and even more preferably 0.1 μm to 0.5 μm.

The sliding angle of the film is, for example, 20° or less, and preferably 15° or less.

The contact angle of the film is, for example, 100° to 130°, preferably 100° to 120°, and more preferably 110° to 120°. The contact angle of the current super-water-repellent surface is approximately 150° or more. The film with which the antenna cover base material of the present disclosure is coated can exhibit high slidability (a low sliding angle

or a high sliding velocity) even when the contact angle is 100° to 130°.

The transmittance (total light transmittance) of the film is preferably 90% or more, more preferably 92% or more, and particularly preferably 95% or more, for a free-standing film having an average film thickness of 200 μm. The higher the permeability, the wider the range of film applications.

The average thickness of the film is preferably 10 nm or more, more preferably 50 nm to 10,000 nm, and particularly preferably 100 nm to 1,000 nm. When the average film thickness is in the above range, it is advantageous in terms of resistance to wear.

The film can contain a fluoropolymer, and the type, molecular weight, and other details of the fluoropolymer are not particularly limited as long as the film has the properties described above.

The fluoropolymer includes a polymer containing as a main component a monomer unit containing a fluorine-containing aliphatic ring. In the present specification, "containing as a main component a monomer unit" means that the proportion of the monomer unit in all of the monomer units in the fluoropolymer is 50 mol% or more.

The proportion of the monomer unit containing a fluorine-containing aliphatic ring is preferably 80 mol% or more, more preferably 90 mol% or more, and particularly preferably 100 mole%.

The fluoropolymer includes a fluoropolymer that contains as a main component a monomer unit that has a 4-, 5-, 6-, or 7-membered fluorine-containing aliphatic ring, wherein the fluorine-containing aliphatic ring of the fluoropolymer has one, two, or three etheric oxygen atoms as ring-constituting atoms, and wherein when the fluorine-containing aliphatic ring contains a plurality of etheric oxygen atoms, the etheric oxygen atoms are not adjacent to each other.

The fluorine-containing aliphatic ring may contain two or more (e.g., two, three, or four) carbon atoms as ring-constituting atoms and may contain one or more (e.g., one, two, three, four, five, or six) carbon-carbon bonds formed between adjacent carbon atoms.

The fluorine-containing aliphatic ring preferably contains as ring-constituting atoms two or more carbon atoms and one, two, or three oxygen atoms and contains no other atoms.

The fluorine-containing aliphatic ring preferably contains no hydrogen atoms.

The fluorine-containing aliphatic ring is preferably an aliphatic ring in which all of the hydrogen atoms are replaced by fluorine atoms.

The fluorine-containing aliphatic ring is preferably a 4-, 5-, or 6-membered ring, and more preferably a 5-membered ring.

The fluorine-containing aliphatic 4-membered ring can contain three carbon atoms and one oxygen atom as ring-constituting atoms. Examples of the fluorine-containing aliphatic 4-membered ring include a perfluorooxetane ring. The fluorine-containing aliphatic 5-membered ring can contain four carbon atoms and one oxygen atom as ring-constituting atoms or can contain three carbon atoms and two oxygen atoms as ring-constituting atoms. Examples of the fluorine-containing aliphatic 5-membered ring include a perfluorotetrahydrofuran ring and a perfluorodioxolane ring.

The fluorine-containing aliphatic 6-membered ring can contain five carbon atoms and one oxygen atom as ring-constituting atoms or can contain four carbon atoms and two oxygen atoms as ring-constituting atoms. Examples of the fluorine-containing aliphatic 6-membered ring include a perfluorotetrahydropyran ring and a perfluoro-1,3-dioxane ring.

The fluorine-containing aliphatic 7-membered ring can contain six carbon atoms and one oxygen atom as ring-constituting atoms, can contain five carbon atoms and two oxygen atoms as ring-constituting atoms, or can contain four carbon atoms and three oxygen atoms as ring-constituting atoms. Examples of the fluorine-containing aliphatic 7-membered ring include a perfluorooxepane ring, a perfluoro-1,3-dioxepane ring, a perfluoro-1,4-dioxepane ring, and a perfluoro-1,3,5-trioxepane ring.

The fluorine-containing aliphatic ring optionally has one or more substituents. When the fluorine-containing aliphatic ring has more than one substituent, the substituents may be the same or different.

The substituent can be at least one member selected from the group consisting of perfluoroalkyl (e.g., linear or branched $C_1$-$C_5$ perfluoroalkyl) and perfluoroalkoxy (e.g., linear or branched $C_1$-$C_5$ perfluoroalkoxy). The number of substituents may be one or more, such as one to four, one to three, one to two, one, two, three, or four.

The substituent is preferably at least one member selected from the group consisting of trifluoromethyl, perfluoroethyl, perfluoropropyl, perfluoroisopropyl, trifluoromethoxy, and perfluoroethoxy, more preferably at least one member selected from the group consisting of trifluoromethyl, perfluoroethyl, perfluoropropyl, and perfluoroisopropyl, and particularly preferably at least one member selected from the group consisting of trifluoromethyl, perfluoroethyl, and trifluoromethoxy.

The fluoropolymer can be a fluoropolymer containing as a main component a monomer unit represented by formula (1):

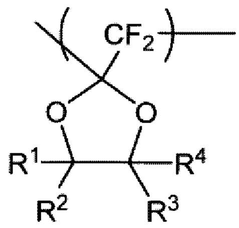

(1)

(wherein $R^1$ to $R^4$ are independently fluorine, fluoroalkyl, or fluoroalkoxy)
(this monomer unit may be referred to as "unit (1)" in the present specification).

This fluoropolymer is preferable in terms of high slidability and high water resistance.

The monomer unit of the fluoropolymer can contain only one, or two or more types of unit (1).

In each of $R^1$ to $R^4$, fluoroalkyl can be, for example, linear or branched $C_1$-$C_5$ fluoroalkyl, linear or branched $C_1$-$C_4$ fluoroalkyl, linear or branched $C_1$-$C_3$ fluoroalkyl, or linear or branched $C_1$-$C_2$ fluoroalkyl.

The linear or branched $C_1$-$C_5$ fluoroalkyl is preferably linear or branched $C_1$-$C_5$ perfluoroalkyl.

The linear or branched $C_1$-$C_4$ fluoroalkyl is preferably linear or branched $C_1$-$C_4$ perfluoroalkyl.

The linear or branched $C_1$-$C_3$ fluoroalkyl is preferably linear or branched $C_1$-$C_3$ perfluoroalkyl.

The $C_1$-$C_2$ fluoroalkyl group is preferably $C_1$-$C_2$ perfluoroalkyl.

In each of $R^1$ to $R^4$, fluoroalkoxy can be, for example, linear or branched $C_1$-$C_5$ fluoroalkoxy, linear or branched $C_1$-$C_4$ fluoroalkoxy, linear or branched $C_1$-$C_3$ fluoroalkoxy, or $C_1$-$C_2$ fluoroalkoxy.

The linear or branched $C_1$-$C_5$ fluoroalkoxy is preferably linear or branched $C_1$-$C_5$ perfluoroalkoxy.

The linear or branched $C_1$-$C_4$ fluoroalkoxy is preferably linear or branched $C_1$-$C_4$ perfluoroalkoxy.

The linear or branched $C_1$-$C_3$ fluoroalkoxy is preferably linear or branched $C_1$-$C_3$ perfluoroalkoxy.

The $C_1$-$C_2$ fluoroalkoxy is preferably $C_1$-$C_2$ perfluoroalkoxy.

$R^1$ to $R^4$ can be each independently fluorine, linear or branched $C_1$-$C_5$ fluoroalkyl, or linear or branched $C_1$-$C_5$ fluoroalkoxy.

$R^1$ to $R^4$ can be each independently fluorine, linear or branched $C_1$-$C_5$ perfluoroalkyl, or linear or branched $C_1$-$C_5$ perfluoroalkoxy.

$R^1$ to $R^4$ can be each independently fluorine, linear or branched $C_1$-$C_4$ fluoroalkyl, or linear or branched $C_1$-$C_4$ fluoroalkoxy.

$R^1$ to $R^4$ can be each independently fluorine, linear or branched $C_1$-$C_4$ perfluoroalkyl, or linear or branched $C_1$-$C_4$ perfluoroalkoxy.

$R^1$ to $R^4$ can be each independently fluorine, linear or branched $C_1$-$C_3$ fluoroalkyl, or linear or branched $C_1$-$C_3$ fluoroalkoxy.

$R^1$ to $R^4$ can be each independently fluorine, linear or branched $C_1$-$C_3$ perfluoroalkyl, or linear or branched $C_1$-$C_3$ perfluoroalkoxy.

$R^1$ to $R^4$ can be each independently fluorine, $C_1$-$C_2$ fluoroalkyl, or $C_1$-$C_2$ fluoroalkoxy.

$R^1$ to $R^4$ can be each independently fluorine, $C_1$-$C_2$ perfluoroalkyl, or $C_1$-$C_2$ perfluoroalkoxy.

$R^1$ to $R^4$ can be each independently fluorine, trifluoromethyl, pentafluoroethyl, or trifluoromethoxy.

At least one of $R^1$ to $R^4$ can be fluorine, and the other groups in $R^1$ to $R^4$ can be independently $C_1$-$C_2$ perfluoroalkyl or $C_1$-$C_2$ perfluoroalkoxy when two or more such other groups are present.

At least two of $R^1$ to $R^4$ can be fluorine, and the other groups in $R^1$ to $R^4$ can be independently $C_1$-$C_2$ perfluoroalkyl or $C_1$-$C_2$ perfluoroalkoxy when two or more such other groups are present.

At least three of $R^1$ to $R^4$ can be fluorine, and the other group in $R^1$ to $R^4$ can be $C_1$-$C_2$ perfluoroalkyl or $C_1$-$C_2$ perfluoroalkoxy.

At least three of $R^1$ to $R^4$ can be fluorine atoms, and the other group in $R^1$ to $R^4$ can be $C_1$-$C_2$ perfluoroalkyl.

$R^1$ to $R^4$ can be all fluorine atoms.

Unit (1) can be a monomer unit represented by the following formula (1-1) (this unit may be referred to as "unit (1-1)" in the present specification). Since the fluoropolymer film containing unit (1-1) as a main component has high slidability and high water resistance, it is suitable for use as a film with which an antenna cover base material is coated to produce an antenna cover base material coated with the film.

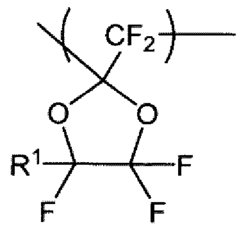

(1-1)

(wherein $R^1$ is a fluorine atom, fluoroalkyl, or fluoroalkoxy).

In unit (1-1), $R^1$ can be fluorine, linear or branched $C_1$-$C_5$ perfluoroalkyl, or linear or branched $C_1$-$C_5$ perfluoroalkoxy.

In unit (1-1), $R^1$ can be fluorine, linear or branched $C_1$-$C_4$ fluoroalkyl, or linear or branched $C_1$-$C_4$ fluoroalkoxy.

In unit (1-1), $R^1$ can be fluorine, linear or branched $C_1$-$C_4$ perfluoroalkyl, or linear or branched $C_1$-$C_4$ perfluoroalkoxy.

In unit (1-1), $R^1$ can be fluorine, linear or branched $C_1$-$C_3$ fluoroalkyl, or linear or branched $C_1$-$C_3$ fluoroalkoxy.

In unit (1-1), $R^1$ can be fluorine, linear or branched $C_1$-$C_3$ perfluoroalkyl, or linear or branched $C_1$-$C_3$ perfluoroalkoxy.

In unit (1-1), $R^1$ can be fluorine, $C_1$-$C_2$ fluoroalkyl, or $C_1$-$C_2$ fluoroalkoxy.

In unit (1-1), $R^1$ can be fluorine, $C_1$-$C_2$ perfluoroalkyl, or $C_1$-$C_2$ perfluoroalkoxy.

In unit (1-1), $R^1$ can be fluorine, trifluoromethyl, pentafluoroethyl, or trifluoromethoxy.

In unit (1-1), $R^1$ can be $C_1$-$C_2$ perfluoroalkyl or $C_1$-$C_2$ perfluoroalkoxy.

In unit (1-1), $R^1$ can be $C_1$-$C_2$ perfluoroalkyl.

A preferred example of unit (1-1) is a monomer unit represented by the following formula (this monomer unit may be referred to as "unit (1-11)" in the present specification).

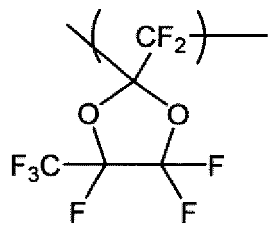

(1-11)

The amount of unit (1) is preferably 70 mol% or more, more preferably 80 mol% or more, even more preferably 90 mol% or more, and particularly preferably 100%, based on the total monomer units.

The fluoropolymer can contain other monomer units in addition to unit (1). The fluoropolymer can contain other monomer units in addition to unit (1). Examples of other monomer units include a tetrafluoroethylene unit ($-CF_2CF_2-$), a hexafluoropropylene unit ($-CF_2CF(CF_3)-$), a vinylidene fluoride unit ($-CH_2CF_2-$), and the like. The fluoropolymer can contain one, two, or more types of monomer units. The amount of such other monomer units can be 50 mol% or less, preferably 30 mol% or less, more preferably 20 mol% or less, even more preferably 10 mol% or less, and particularly preferably 0%, based on the total monomer units.

The fluoropolymer can contain one or more other monomers as long as the slidability and water resistance are not substantially impaired. However, containing no other monomer units is preferable. Examples of such other monomer units include $-C\ (CF_3CF_2((CF_2CF_2)_m)H-CH_2-$ (wherein m is 1 or 2). The amount of such other monomer units can be, for example, 0 to 20 mol%, 0 to 10 mol%, etc., based on the total monomer unit.

The fluoropolymer preferably has a glass transition point (Tg) of 100°C or more, more preferably 100°C to 300°C, and even more preferably 100°C to 200°C. When the glass transition point is within these ranges, it is advantageous in terms of high sliding velocity and in terms of bending durability of the film when the film is formed on a flexible base material.

The mass average molecular weight of the fluoropolymer is, for example, in the range of 50,000 to 1,000,000, preferably 50,000 to 500,000, and more preferably 50,000 to 300,000. When the fluoropolymer has a molecular weight within the above ranges, it is advantageous in terms of high sliding velocity and in terms of bending durability of the film when the film is formed on a flexible base material. The mass average molecular weight is determined by the GPC method as described in the Examples.

The film has a fluoropolymer content of, for example, 50 mass% or more, preferably 80 mass% or more, and more preferably 90 mass% or more, based on the total mass of the film.

The fluoropolymer can be produced, for example, by polymerizing one or more monomers corresponding to the monomer units of the fluoropolymer by an appropriate polymerization method. For example, the fluoropolymer can be produced by polymerizing only one, or two or more types of monomers (M1) corresponding to unit (1), optionally with one or more other monomers. A person skilled in the art would be able to understand monomers corresponding to the monomer units of the fluoropolymer.

For example, the monomer corresponding to unit (1) is a compound represented by formula (M1):

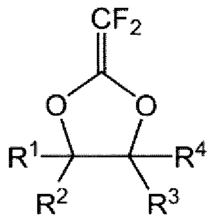

(M1)

(wherein $R^1$ to $R^4$ are as defined above) (this compound may be referred to as "monomer (M1)" in the present specification).

For example, the monomer corresponding to unit (1-1) is a compound represented by formula (M1-1):

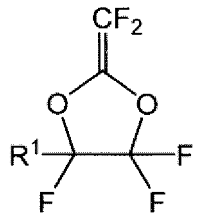

(M1-1)

(wherein $R^1$ is fluorine, fluoroalkyl, or fluoroalkoxy) (this compound may be referred to as "monomer (M1-1)" in the present specification).

For example, the monomer corresponding to unit (1-11) is a compound represented by formula (M1-11):

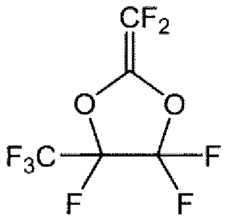

(M1-11)

(this compound may be referred to as "monomer (M1-11)" in the present specification).

For example, monomers corresponding to a tetrafluoroethylene unit ($-CF_2-CF_2-$), a hexafluoropropylene unit ($-CF_2CF(CF_3)-$), and a vinylidene fluoride unit ($-CH_2CF_2-$) are tetrafluoroethylene ($CF_2=CF_2$), hexafluoropropylene ($CF_2=CFCF_3$), and vinylidene fluoride ($CH_2=CF_2$), respectively.

The polymerization method includes, for example, a method of using appropriate amounts of monomers corresponding to the monomer units that constitute the fluoropolymer, with the monomers being optionally dissolved or dispersed in a solvent (e.g., an aprotic solvent) and a polymerization initiator being optionally added, and performing polymerization, such as radical polymerization, bulk polymerization, solution polymerization, suspension polymerization, or emulsion polymerization.

The polymerization method is preferably solution polymerization because the solution polymerization can produce a high-concentration solution of the fluoropolymer and thereby achieve a high manufacturing yield and purification is easy. Therefore, the fluoropolymer is preferably a fluoropolymer produced by solution polymerization. The fluoropolymer is more preferably produced by solution polymerization in which a monomer is polymerized in the presence of an aprotic solvent.

The solvent used in solution polymerization of the fluoropolymer is preferably an aprotic solvent. When an aprotic solvent is used to produce the fluoropolymer, the aprotic solvent can be used in an amount of 70 mass% or less, preferably 35 mass% to 70 mass%, more preferably more than 35 mass% to less than 70 mass%, even more preferably 50 mass% to less than 70 mass%, and particularly preferably 50 mass% to 69 mass%, based on the sum of the mass of the monomers and the mass of the solvent.

The aprotic solvent used in the polymerization of fluoropolymers can be, for example, at least one member selected from the group consisting of perfluoroaromatic compounds, perfluorotrialkylamines, perfluoroalkanes, hydrofluorocarbons, perfluorocyclic ethers, and hydrofluoroethers.

The perfluoroaromatic compound is, for example, a perfluoroaromatic compound optionally having one or more perfluoroalkyl groups. The aromatic ring of the perfluoroaromatic compound can be at least one ring selected from the group consisting of a benzene ring, a naphthalene ring, and an anthracene ring. The perfluoroaromatic compound can have one or more (e.g., one, two, or three) aromatic rings.

The perfluoroalkyl group as a substituent is, for example, linear or branched $C_1$-$C_6$, $C_1$-$C_5$, or $C_1$-$C_4$ perfluoroalkyl, and preferably linear or branched $C_1$-$C_3$ perfluoroalkyl.

The number of substituents is, for example, one or more, such as one to four, preferably one to three, and more preferably one or two. When a plurality of substituents are present, the substituents may be the same or different.

Examples of perfluoroaromatic compounds include perfluorobenzene, perfluorotoluene perfluoroxylene, and perfluoronaphthalene.

Preferred examples of perfluoroaromatic compounds include perfluorobenzene and perfluorotoluene.

The perfluorotrialkylamine is, for example, an amine substituted with three linear or branched perfluoroalkyl groups. The number of carbon atoms of each perfluoroalkyl group is, for example, 1 to 10, preferably 1 to 5, and more preferably 1 to 4. The perfluoroalkyl groups can be the same or different, and are preferably the same.

Examples of perfluorotrialkylamines include perfluorotrimethylamine, perfluorotriethylamine, perfluorotripropylamine, perfluorotriisopropylamine, perfluorotributylamine, perfluorotri-sec-butylamine, perfluorotri-tert-butylamine, perfluorotripentylamine, perfluorotriisopentylamine, and perfluorotrineopentylamine.

Preferred examples of perfluorotrialkylamines include perfluorotripropylamine and perfluorotributylamine.

The perfluoroalkane is, for example, a linear, branched, or cyclic $C_3$-$C_{12}$ (preferably $C_3$-$C_{10}$, more preferably $C_3$-$C_6$) perfluoroalkane.

Examples of perfluoroalkanes include perfluoropentane, perfluoro-2-methylpentane, perfluorohexane, perfluoro-2-methylhexane, perfluoroheptane, perfluorooctane, perfluorononane, perfluorodecane, perfluorocyclohexane, perfluoro(methylcyclohexane), perfluoro(dimethylcyclohexane) (e.g., perfluoro(1,3-dimethylcyclohexane)), and perfluorodecalin.

Preferred examples of perfluoroalkanes include perfluoropentane, perfluorohexane, perfluoroheptane, and perfluorooctane.

The hydrofluorocarbon is, for example, a $C_3$-$C_8$ hydrofluorocarbon. Examples of hydrofluorocarbons include $CF_3CH_2CF_2H$, $CF_3CH_2CF_2CH_3$, $CF_3CHFCHFC_2F_5$, 1,1,2,2,3,3,4-heptafluorocyclopentane, $CF_3CF_2CF_2CF_2CH_2CH_3$, $CF_3CF_2CF_2CF_2CF_2CHF_2$, and $CF_3CF_2CF_2CF_2CF_2CF_2CH_2CH_3$.

Preferred examples of hydrofluorocarbons include $CF_3CH_2CF_2H$ and $CF_3CH_2CF_2CH_3$.

The perfluorocyclic ether is, for example, a perfluorocyclic ether optionally having one or more perfluoroalkyl groups. The ring of the perfluorocyclic ether may be a 3- to 6-membered ring. The ring of the perfluorocyclic ether may have one or more oxygen atoms as a ring-constituting atom. The ring preferably has one or two oxygen atoms, and more preferably one oxygen atom.

The perfluoroalkyl group as a substituent is, for example, linear or branched $C_1$-$C_6$, $C_1$-$C_5$, or $C_1$-$C_4$ perfluoroalkyl. The perfluoroalkyl group is preferably linear or branched $C_1$-$C_3$ perfluoroalkyl.

The number of substituents is, for example, one to four, preferably one to three, and more preferably one or two. When a plurality of substituents are present, the substituents can be the same or different.

Examples of perfluorocyclic ethers include perfluorotetrahydrofuran, perfluoro-5-methyltetrahydrofuran, perfluoro-5-ethyltetrahydrofuran, perfluoro-5-propyltetrahydrofuran, perfluoro-5-butyltetrahydrofuran, and perfluorotetrahydropyran.

Preferred examples of perfluorocyclic ethers include perfluoro-5-ethyltetrahydrofuran and perfluoro-5-butyltetrahydrofuran.

The hydrofluoroether is, for example, a fluorine-containing ether.

The hydrofluoroether preferably has a global warming potential (GWP) of 400 or less, and more preferably 300 or less.

Examples of hydrofluoroethers include $CF_3CF_2CF_2CF_2OCH_3$, $CF_3CF_2CF(CF_3)OCH_3$, $CF_3CF(CF_3)CF_2OCH_3$, $CF_3CF_2CF_2CF_2OC_2H_5$, $CF_3CH_2OCF_2CHF_2$, $C_2F_5CF(OCH_3)C_3F_7$, trifluoromethyl 1,2,2,2-tetrafluoroethyl ether (HFE-227me), difluoromethyl 1,1,2,2,2-pentafluoroethyl ether (HFE-227mc), trifluoromethyl 1,1,2,2-tetrafluoroethyl ether (HFE-227pc), difluoromethyl 2,2,2-trifluoroethyl ether (HFE-245mf), and 2,2-difluoroethyltrifluoromethyl ether (HFE-245pf).

Preferred examples of hydrofluoroethers include $CF_3CF_2CF_2CF_2OCH_3$, $CF_3CF_2CF_2CF_2OC_2H_5$, $CF_3CH_2OCF_2CHF_2$, and $C_2F_5CF(OCH_3)C_3F_7$.

The hydrofluoroether is preferably a compound represented by the following formula (B1):

$R^{21}$-O-$R^{22}$ (B1)

(wherein $R^{21}$ is linear or branched perfluorobutyl, and $R^{22}$ is methyl or ethyl).

As the aprotic solvent, a hydrofluoroether is preferable because it has less environmental impact during use and polymers can be dissolved at high concentrations in it.

The amount of the aprotic solvent used in the polymerization reaction can be, for example, 20 mass% to 300 mass%, preferably 35 mass% to 300 mass%, and more preferably 50 mass% to 300 mass%, based on the monomer amount defined as 100 mass%.

Preferred examples of polymerization initiators include di-n-propyl peroxydicarbonate, diisopropyl peroxydicarbonate, diisobutyryl peroxide, di(ω-hydro-dodecafluoroheptanoyl)peroxide, di(ω-hydro-hexadecafluorononanoyl)peroxide, ω-hydro-dodecafluoroheptanoyl-ω-hydro-hexadecafluorononanoyl-peroxide, benzoyl peroxide, tert-butyl peroxypivalate, tert-hexyl peroxypivalate, ammonium persulfate, sodium persulfate, and potassium persulfate.

More preferred examples of polymerization initiators include di-n-propyl peroxydicarbonate, diisopropyl peroxydicarbonate, diisobutyryl peroxide, di(ω-hydro-dodecafluoroheptanoyl)peroxide, benzoyl peroxide, tert-butyl peroxypivalate, tert-hexyl peroxypivalate, and ammonium persulfate.

The amount of the polymerization initiator used in the polymerization reaction can be, for example, 0.0001 g to 0.05 g, preferably 0.0001 g to 0.01 g, and more preferably 0.0005 g to 0.008 g, per gram of all monomers subjected to the reaction.

The temperature of the polymerization reaction can be, for example, -10°C to 160°C, preferably 0°C to 160°C, and more preferably 0°C to 100°C.

The reaction time for the polymerization reaction is preferably 0.5 to 72 hours, more preferably 1 to 48 hours, and even more preferably 3 to 30 hours.

The polymerization reaction can be performed in the presence or absence of an inert gas (e.g., nitrogen gas), and preferably in the presence of an inert gas.

The polymerization reaction can be performed under reduced pressure, atmospheric pressure, or increased pressure.

The polymerization reaction can be performed by adding the monomer to an aprotic solvent containing the polymerization initiator. The polymerization reaction can also be performed by adding the polymerization initiator to the aprotic solvent containing the monomer and subjecting the monomer to polymerization conditions.

The fluorine-containing polymer produced by the polymerization reaction can be purified, if desired, by a conventional method, such as extraction, dissolution, concentration, filtration, precipitation, dehydration, adsorption, or chromatography, or a combination of these methods. Alternatively, a solution of the fluoropolymer produced by the polymerization reaction, a dilute solution thereof, or a mixture of the solution with other optional components or the like, is dried or heated (e.g., 50°C to 200°C) to form a film containing the fluoropolymer.

The film can contain one or more other components in addition to the fluoropolymer as long as the slidability and durability of the slidability are not substantially impaired. Examples of such other components include polymerization initiators, starting material monomers, oligomers, other fluoropolymers, and the like. "Other fluoropolymers" refers to such fluoropolymers that films formed from them alone do not have one or either of the following properties of the film of the present disclosure: a sliding velocity of 150 mm/s at an inclination angle of 30°, and an average surface roughness (Ra) of 1 μm or less. Examples of such other fluoropolymers include fluoro(meth)acrylate polymers and the like.

The content of such other components in the film is, for example, 50 mass% or less, preferably 20 mass% or less, and more preferably 10 mass% or less, based on the total mass of the film.

The antenna cover base material of the present disclosure is a base material for antenna covers coated with the film. The degree of coating is not particularly limited, and it is sufficient if at least the portion that is required to be coated, for example, the portion that comes in contact with water, such as rain, is coated. Accordingly, the portion to be coated can be all or part of the surface of the antenna cover. The method for coating the antenna cover base material of the present disclosure with the film can be, for example, a method comprising applying to a base material a fluoropolymer-containing liquid, such as a solution or dispersion of a fluoropolymer in a suitable solvent. The usable method is not limited to this and further includes, for example, a method comprising vapor-depositing a fluoropolymer on the substrate; a method comprising laminating a fluoropolymer film, which has been prepared beforehand, on a base material by, for example, a casting method; and the like.

The material of the antenna cover base material to be coated with the film is not particularly limited, and includes, for example, polytetrafluoroethylene resins, polycarbonates, and unsaturated polyesters containing reinforcing fibers, and the like.

The size and shape of the antenna cover base material can be appropriately selected according to the size and shape of the antenna to be covered.

## Coating Agent

One embodiment of the present disclosure is a coating agent for coating the surface of an antenna cover base material surface, the coating agent comprising a fluoropolymer and an aprotic solvent, and the fluoropolymer containing a monomer unit having a 4-, 5-, 6-, or 7-membered fluorine-containing aliphatic ring as a main component. The fluorine-containing aliphatic ring of the fluoropolymer has one, two, or three etheric oxygen atoms as ring-constituting atoms. When the fluorine-containing aliphatic ring contains more than one such etheric oxygen atom, the etheric oxygen atoms are not adjacent to each other.

The antenna cover base material whose surface is coated with the coating agent of the present disclosure is preferably an antenna cover base material of the present disclosure described above.

The fluoropolymer in the coating agent can be the fluoropolymer explained above in the description of the antenna cover base material. Accordingly, the details of the fluoropolymer in the antenna cover base material can be applied to the details of the fluoropolymer in the coating agent.

The coating agent has a fluoropolymer content of 0.01% to 70 mass%, such as 0.01 mass% to 70 mass%, preferably 0.02 mass% to 50 mass%, and more preferably 0.1 mass% to 5 mass%.

The aprotic solvent in the coating agent can be an aprotic solvent explained above in the description of the antenna cover base material. Accordingly, the details of the aprotic solvent in the antenna cover base material are applicable to the details of the aprotic solvent in the coating agent. The coating agent has an aprotic solvent content of, for example, 30 to 99.99 mass%, preferably 50 mass% to 99.98 mass%, and more preferably 95 mass% to 99.9 mass%, based on the total mass of the coating agent.

The coating agent may contain a polymerization initiator. The polymerization initiator in the coating agent can be the polymerization initiator explained above in the description of the antenna cover base material. Accordingly, the details of the polymerization initiator in the antenna cover base material can be applied to the details of the polymerization initiator in the coating agent.

The coating agent has a polymerization initiator content of, for example, 0.00001 mass% to 10 mass%, preferably 0.00005 mass% to 10 mass%, more preferably 0.0001 mass% to 10 mass%, based on the total mass of the coating agent.

In addition to the fluoropolymer, an aprotic solvent, and a polymerization initiator, the coating agent can contain other components in appropriate amounts. Such other components can be known components that are used in coating agents for antenna cover base materials. Examples of such other components include chain transfer agents, thickening agents, dyes, pigments, and the like. The content of such other components can be 0.01 mass% to 50 mass%, preferably 0.01 mass% to 30 mass%, and more preferably 0.01 mass% to 10 mass%, relative to the total mass of the coating agent.

The coating agent can be produced by mixing the fluoropolymer and an aprotic solvent optionally with other components. Alternatively, the coating agent can be produced by mixing a polymerization reaction mixture obtained by the above solution polymerization of a fluoropolymer (the reaction mixture contains at least a fluoropolymer and an aprotic solvent) optionally with an aprotic solvent and other components. In the solution polymerization, the coating agent preferably contains the polymerization reaction mixture obtained by solution polymerization because the fluoropolymer concentration in the polymerization reaction mixture or the amount of fluoropolymer dissolved can be increased and the step of isolating the fluoropolymer from the polymerization reaction mixture can be omitted.

The content of the polymerization reaction mixture obtained by solution polymerization in the coating agent can be selected according to, for example, the concentration of the fluoropolymer in the polymerization reaction mixture and the thickness of the film to be produced. The content of the polymerization reaction mixture obtained by solution polymerization in the coating agent can be, for example, 5 mass% to 100 mass%, preferably 20 mass% to 100 mass%, and more preferably 30 mass% to 100 mass%, based on the total mass of the coating agent.

The coating agent containing an aprotic solvent in which a fluoropolymer is dissolved or dispersed is applied to the antenna cover base material by an appropriate method (e.g., spray coating, spin coating, bar coating, dipping) and then the solvent is removed by drying, heating, etc. to form a film, whereby the surface of the antenna cover base material can be coated. After application of the coating agent, heating is preferably preferred. The heating temperature is, for example, 50°C to 200°C, and preferably 100°C to 200°C.

## Method for Evaluating Water Slidability of the Film

One embodiment of the present disclosure is a method of immersing a base plate having one surface coated with a film (this plate may be referred to as "sample base plate" in the present specification) in water and evaluating water slidability of the film (this method may be referred to as "evaluation method" in the present specification). In this method, the sliding velocity of water droplets on the film is measured in steps A to D, the water score is calculated in step F. The water scores of different films subjected to the method of the present disclosure under the same conditions are individually calculated, and the sliding velocity of water droplets on the different films after immersion treatment can be evaluated by comparing the obtained water scores.

In step A, the sliding velocity of water droplets on the film before immersion in water, SVs (mm/s), is measured.

In step B, the sliding velocity of water droplets on the film immediately after immersion in the water (e.g., water temperature: 10°C to 40°C) for a predetermined period of time (e.g., 1 hour to 240 hours), SVw (mm/s), is measured.

In step C, the sliding velocity of water droplets on the film after drying the immersed film (e.g., at 10°C to 40°C for 12 hours to 7 days), SVd (mm/s), is measured.

In step D, the sliding velocity of water droplets on the film after drying the immersed film (e.g., at 100°C to 200°C for 1 to 20 minutes, SVra (mm/s), is measured.

In step F, the water score is calculated from the sliding velocity values obtained in Steps A to D and the following equation (F).

$$\text{(F)}\quad \text{Water score} = 100 \times [(SVw/SVs) + (SVd/SVs) + (SVra/SVs)].$$

The evaluation method of the present disclosure includes the above steps A to F.

The evaluation method of the present disclosure comprises steps A to F as a set of measurements. The set of measurements is performed at least once, such as 1 to 100 times, 1 to 50 times, or 1 to 20 times, and preferably performed 1 to 10 times, more preferably 2 to 10 times, and particularly preferably 2 to 5 times. In the present specification, the number of times that the set of measurements is performed may be referred to as "n" in the present specification.

When the set of measurements is performed two or more times, the sample base plate subjected to the first set of steps A to D is replaced with a new sample base plate considered to be equivalent, and the second set of steps A to D is then performed. Similarly, for the third set of measurements and measurements thereafter, a new sample base plate is used for each set of measurements. The sets of measurements can be performed sequentially or in parallel.

In the evaluation method of this disclosure, as long as the base plate can be coated with the film and the sliding velocity can be appropriately measured in steps A to D, base plates of any material, any shape, and any thickness can be used. Examples of base plate materials include silicon wafers, glass, polyester, polymethyl methacrylate, and the like. The size, shape, and thickness of the base plate, can be, for example, a square with a size of 3 cm x 3 cm and a thickness of 1 mm.

As long as the sliding velocity can be appropriately measured in steps A to D, the film with which the base material is coated can be a film of any material, any size, and any thickness. The film can be a film comprising the fluoropolymer explained in the description of the antenna cover base material of the present disclosure. Alternatively, the film can be a film comprising a fluoropolymer different from the fluoropolymer described above.

Step A measures the sliding velocity of water droplets on the film before the base plate having a surface coated with the film is immersed in water (SVs). The measurement can be made, for example, 4 hours to several seconds before immersion of the base plate in water.

In step B, the substrate is immersed in water and the sliding velocity of water droplets on the film of the immersed base plate immediately after removal of the base plate from the water (SVw) is measured.

The temperature of the water in which the base plate is immersed is not particularly limited, and can be, for example, 10°C to 40°C, preferably 20°C to 30°C, and more preferably 20°C to 25°C.

The length of time the base material is immersed in water is not particularly limited, and can be 1 to 240 hours, preferably 2 to 200 hours, more preferably 10 to 150 hours, and particularly preferably 20 to 140 hours.

When the set of measurements is performed two or more times, it is advantageous to use a different immersion time for each set of measurements because the water slidability in each immersion time can be thereby understood. For example, if a set of measurements is performed three times, the immersion time in step B can be set to 24, 72, and 120 hours, and the measurement scores in each immersion time can be compared.

When a set of measurements is performed three or more times and a different immersion time is used for each set of measurements, it is preferable to include the following immersion time: the first immersion time selected from the range of 10 to 40 hours or more (preferably 20 hours to 30 hours); the second immersion time selected from the range of 60 to 90 hours (preferably 70 to 80 hours); and the third immersion time selected from the range of 100 to 140 hours (preferably 110 hours to 130 hours).

When a set of measurements is performed two or more times, the same immersion time can be used for both sets of measurements. Using the same immersion time increases the reliability of the obtained measurement scores.

The immersion treatment can be a method in which the coated surface of the base material is fully brought into contact with water. For example, the following methods can be used. If the base material is a material that floats on water, a method of floating the base material on the surface of the water with the coated surface facing down can be used. If the base material is a material that becomes submerged in water, a method of submerging the base material in water with the coated surface facing up can be used.

In step C, the base plate immersed in step B is dried at 10°C to 40°C for 12 hours to 7 days and the sliding velocity of water droplets on the dried base plate thus obtained (SVd) is measured. The drying temperature is preferably

20°C to 30°C, and more preferably 20°C to 25°C. The drying time is preferably 12 hours to 7 days and more preferably 3 days to 7 days. The drying treatment is preferably performed in an environment with a humidity of 20 to 70%.

The film after the drying treatment may have a higher sliding velocity than that of the film immediately after the immersion treatment. In this case, it can be found that the sliding velocity of the film reduced by the immersion treatment can be recovered to some extent due to the drying treatment.

In step D, the base plate that has been dried in step C is heated at 100°C to 200°C for 1 to 20 minutes and the sliding velocity of water droplets on the obtained heat-treated base plate (SVra) is measured. The heating temperature is preferably 120°C to 190°C. The heating time is preferably 1 to 20 minutes and more preferably 5 to 15 minutes. The heat treatment is preferably performed by heating the dried base material on a hot plate. The film after heat treatment often exhibits a higher sliding velocity than that of the film immediately after immersion treatment. In this case, the sliding velocity of the film reduced due to immersion treatment is found to be significantly improved due to the heat treatment.

In step F, the sliding velocity values measured in steps A to D are input into to the following mathematical formula (F) to calculate the water score of the film.

$$\text{Water score} = 100 \times [(SVw/SVs) + (SVd/SVs) + (SVra/SVs)] \qquad (F)$$

When different films are subjected to a set of measurements under the same conditions and the obtained water scores are compared, the degree of decrease in sliding velocity from the initial velocity (i.e., velocity before immersion treatment) can be evaluated. For example, a high water score can be evaluated as meaning a low degree of decrease in sliding velocity.

The evaluation method of the present disclosure can further comprise the following step when a set of measurements is performed two or more times.

Step G: a step of calculating the sum of the water scores determined in each set of measurements from the first set to the $n^{th}$ set of measurements as the total water score,

wherein n is an integer of 2 or more, and the immersion time in each set of measurements is preferably different.

When the immersion time for each set of measurements is changed, the total water score can be shown as one score in which measurements with different degrees of immersion can be summed.

When different types of films are evaluated in the evaluation method of the present disclosure, it is not preferable to use different conditions for each type of film in terms of immersion, drying, and heat treatment; these conditions are preferably the same.

Further, in the evaluation method of the present disclosure, it is preferable to perform measurement by using a plurality of sample base plates coated with the same film because this enhances the reliability of the water score. When a plurality of sample base plates coated with the same film are used, the water sliding velocity determined by using the sample base plates can be summed for each step and divided by the number of the base plates to obtain the average value, which can be used as the sliding velocity on water droplets in each step, i.e., SVs, SVw, SVd, and SVra.

Assuming that the set of measurements is performed three times with the first immersion time being selected from the range of 10 to 40 hours (preferably 20 to 30 hours), the second immersion time being selected from the range of 60 to 90 hours (preferably 70 to 80 hours), and the third immersion time being selected from the range of 100 to 140 hours (preferably 110 to 130 hours), if the total water score obtained in the measurement is 100 or more, the film can be evaluated to be within the range of practical use because a decrease in water slidability of the film in the rainfall environment in which antenna covers are actually used is suppressed, and the amount of water droplets adhering to the antenna cover can be reduced.

The total water score can be, for example, 120 or more, or 150 or more. From the viewpoint of suppressing a decrease in sliding velocity, the total water score is preferably 170 or more, more preferably 180 or more, and even more preferably 200 or more.

A higher upper limit of the total water score is preferable; however, it is not particularly limited. When a set of measurements is performed three times and no decrease in sliding velocity is observed after immersion for a predetermined period of time, the upper limit of the total water score is estimated to be 900 points.

Although embodiments of the present disclosure have been described above, it will be understood that various modifications of the embodiments and details can be made without departing from the spirit and scope of the claims.

## Examples

An embodiment of the present disclosure is described in more detail below with Examples; however, the present disclosure is not limited to these.

In the Examples, "Mw" means mass average molecular weight.

Contact angle

The contact angle was measured with a Drop Master 701 meter (produced by Kyowa Interface Science Co., Ltd.). The same sample was measured 5 times, and the average was determined to be the contact angle.
After a water droplet of 2 μL or 5 μL was formed on the tip of an injection needle (Kyowa Interface Science Co., Ltd., product No.506, needle: 22G, outer diameter/inner diameter: 0.71 mm/0.47 mm), the distance between the surface of a coated substrate placed on a horizontal sample stage and the water droplet on the tip of the injection needle was gradually shortened by moving the sample stage. When both came into contact, the sample stage and the injection needle were immobilized. Subsequently, by moving the sample stage, the sample stage was slowly separated from the injection needle to deposit the water droplet onto the surface of the coated substrate. One second after the droplet was deposited, a still image of the water droplet was photographed. Photographing was conducted by setting the post-droplet deposition to 1000 ms and the zoom magnification to "STD" beforehand in the DropMaster control program FAMAS. Based on the still image, the contact angle was determined using the θ/2 method, assuming the outline of the water droplet to be a perfect circle.
When a water droplet did not adhere to the surface of the coated substrate, and could not be deposited with a droplet volume of 2 μL, the measurement was conducted with a droplet volume of 5 μL.

Sliding angle and 5-mm move-slide angle

The sliding angle was measured with a Drop Master 701 meter (produced by Kyowa Interface Science Co., Ltd.). The same sample was measured 3 times, and the average was determined to be the sliding angle or 5-mm move-slide angle.
After a water droplet of 20 μL was formed on the tip of an injection needle (Kyowa Interface Science Co., Ltd., product No.508, needle: 15G, outer diameter/inner diameter: 1.80 mm/1.30 mm), the distance between the surface of a coated substrate placed on a horizontal sample stage and the water droplet on the tip of the injection needle was gradually shortened by moving the sample stage. When both came into contact, the sample stage and the injection needle were immobilized. Subsequently, by moving the sample stage, the sample stage was slowly separated from the injection needle to deposit the water droplet on the surface of the coated substrate. Within approximately 5 seconds after the droplet was deposited, the sample stage was tilted at a tilt rate of 2° per second, and a still image (the width of the still image being 12 mm) of the water droplet on the surface of the substrate was photographed at a zoom magnification of W1 every 1° tilt angle. The tilt angle of the sample stage at the time the contact line of the water droplet on the receding side started to move (when the sample stage was moved by 0.1 to 1 mm on the measurement screen; the actual liquid droplet moving distance was 10 to 100 pm) was taken as the sliding angle.
The tilt angle at which the water droplet moved and disappeared from the measurement screen at a zoom magnification of W1 was recorded as the "5-mm move-slide angle" to distinguish it from the "sliding angle" described above. The 5-mm move-slide angle is included in the roll-off angle defined in "Paints and varnishes - Wettability - Part 7: Measurement of the contact angle on a tilt stage (roll-off angle)" according to ISO 19403-7:2017. ISO 19403-7:2017 defines the travel distance of a liquid droplet as 1 mm or more, and the 5-mm move-slide angle is a tilt angle at which the liquid droplet moves by 5 mm or more.

Sliding velocity

The sliding velocity was measured with a Drop Master 701 meter (produced by Kyowa Interface Science Co., Ltd.). The same sample was measured 3 times, and the average was determined to be the sliding velocity.
20 μL of the water droplet was formed after an injection needle (Kyowa Interface Science Co., Ltd., product No. 506, needle 22 G, outer diameter/inner diameter: 0.71 mm/0.47 mm) nearly came into contact with the surface of a coated substrate placed on a sample stage inclined at 30° beforehand. At this stage, the water droplet was motionless on the inclined coated substrate due to the injection needle. Within approximately 5 seconds after the water droplet was formed, the injection needle was moved and pulled away from the droplet, causing the droplet to slide, and the behavior of the water droplet was captured in still images every 5 milliseconds (200 frames per second) with a high-speed camera. The zoom magnification for photographing was W2. Only when the contact line of the water droplet on the forward side was able to move by 15 to 20 mm per second was the water droplet determined to have slid. The results were plotted on a graph with the time taken for the water droplet to slide (seconds) on the horizontal axis and the distance traveled by the water droplet (mm) on the vertical axis. The inclination of the graph fit to least squares, assuming a linear function passing through the origin, was determined to be the sliding velocity (mm/s) .

Mass average molecular weight Mw

The mass average molecular weight Mw was determined by gel permeation chromatography (GPC) as shown below.

Sample adjusting method

A polymer was dissolved in perfluorobenzene to produce a 2 wt% polymer solution, which was passed through a membrane filter (0.22 μm) to produce a sample solution.

Measurement method

Molecular weight standard sample: polymethyl methacrylate Detection method: RI (refractive index detector)

Surface roughness (Ra)

The surface roughness (Ra) was measured using a VK-9710 laser microscope (produced by Keyence Corporation).

From a roughness curve, only the reference length in the direction of the average line is extracted. When the direction of the average line of the extracted portion is on the X axis, and the direction of the vertical magnification is on the Y axis, the roughness curve is represented by y = f(x). The value obtained by the following formula:

$$Ra = \frac{1}{\ell}\int_0^{\ell}\{f(x)\}dx$$

was expressed in micrometer (μm).

Total light transmittance

The transmittance was measured using an NDH 7000SPII haze meter (produced by Nippon Denshoku Kogyo Co., Ltd.) in accordance with JIS K 7375:2008 "Plastics - Test method for total light transmittance of transparent materials."

Glass transition temperature (Tg)

The glass transition temperature (Tg) of the fluoropolymer was measured using a DSC (differential scanning calorimeter; Hitachi High-Tech Science Corporation, DSC7000) by increasing the temperature (first run), decreasing the temperature, and then increasing the temperature (second run) at 10°C/minute in the temperature range of 30°C to 200°C. The midpoint of the endothermic curve in the second run was determined to be the glass transition temperature (°C).

Average film thickness

The average film thickness was defined as a difference in height between the substrate and the coating film, which is obtained by measuring, by using an atomic force microscope (AFM), the line profile of the cross-section of a coating film of the coated base material that was cut to the substrate with a cutter knife. The same sample was measured 5 times, and the average was determined to be the film thickness.

Production Example 1: Synthesis of fluoropolymer (dioxolane skelton-containing polymer; fluoropolymer A) containing unit (1-11) as main component

The compound (2-(difluoromethylene)-4,4,5-trifluoro-5-(trifluoromethyl)-1,3-dioxolane) represented by the above formula (M1-11) was used as a monomer to produce a polymer (also referred to as "fluoropolymer A") containing unit (1-11) as the main component. The details are described below.

After 10 g of the monomer, 15 g of a solvent (methyl nonafluorobutyl ether), and 0.017 g of an initiator solution (a methanol solution containing 50 mass% of di-n-propyl peroxydicarbonate) were added to a 50-mL glass vessel, heating was performed so that the internal temperature reached 40°C, thus performing polymerisation reaction for 20 hours to give a reaction mixture containing 36 mass% of a fluoropolymer (fluoropolymer A) composed of unit (1-11).

The reaction mixture was distilled off by vacuum drying at 120°C to give a target fluoropolymer (8.5 g (Mw: 273,268)).
The glass transition temperature (Tg) of the polymer was 129°C.

Production Example 2: Production of fluoropolymer

As shown below, a fluoropolymer containing the monomer unit represented by the following formula (30) was produced by the method described in Example 11 of JPH1-131214.

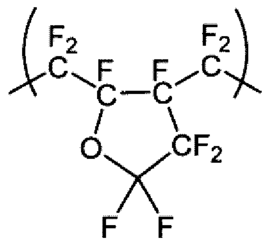

(30)

Comparative Production Example 1: Synthesis of Rf(C8) acrylate homopolymer

A solution (Novec 7300, 3M Japan Limited) containing 20 mass% of 2-(perfluorooctyl)ethyl acrylate (also referred to as "Rf(C8)acrylate") was added to a four-necked flask, heated at 80°C under stirring, and subjected to nitrogen substitution for 30 minutes. N-azobisisobutyronitrile was added in an amount of 1 mol% relative to the Rf(C8) acrylate to perform a reaction for 12 hours. The reaction mixture was brought back to room temperature and added dropwise to methanol, thus precipitating a produced polymer. After removal of methanol by decantation, the polymer was dried under reduced pressure to give an Rf(C8) acrylate homopolymer.

Example 1: Substrate coated with fluoropolymer solution (fluoropolymer A/Fluorinert FC-770)

The fluoropolymer A obtained in Production Example 1 was diluted with a fluorinated solvent (Fluorinert FC-770, 3M Japan Limited) to 1 mass% to give a fluoropolymer solution. The solution was spin-coated (2000 rpm) on a silicone wafer and heat-treated at 180°C for 10 minutes. Thereafter, the silicone wafer was cut into a size of 3 cm x 3 cm to produce a coated substrate (thickness: 1 mm).
Measurement of the cutting area by AFM showed that the average film thickness was about 100 nm. One day later, the liquid repellency (contact angle, sliding angle, 5-mm move-slide angle, and sliding velocity) and surface roughness of the produced substrate were measured. The results of the surface roughness and liquid repellency are shown in Table 1. The results of the surface roughness and liquid repellency in other Examples or the like are also shown in Table 1.

Examples 2 to 5: Substrates coated with fluoropolymer solutions prepared from fluorinated solvents other than Fluorinert FC-770

Coated substrates were produced in the same manner as in Example 1 except that the fluorinated solvent (Fluorinert FC-770 (also referred to as "FC-770")) was replaced with perfluorobenzene (also referred to as "PFBz") in Example 2, a solution containing 1 mass% of a mixture of methyl nonafluorobutyl ether and methyl nonafluoroisobutyl ether (Novec 7100, 3M Japan Limited; sometimes referred to as "HFE7100") in Example 3, a solution containing 1 mass% of a mixture of ethyl nonafluorobutyl ether and ethyl nonafluoroisobutyl ether (Novec 7200, 3M Japan Limited; sometimes referred to as "HFE7200") in Example 4, and a solution containing 1 mass% of 1,1,1,2,2,3,4,5,5,5-decafluoro-3-methoxy-4-(trifluoromethyl)-pentane (Novec 7300, 3M Japan Limited; sometimes referred to as "HFE7300") in Example 5.
The liquid repellency and surface roughness of these coated substrates were measured one day later.

Example 6: Substrate coated with fluoropolymer of Production Example 2

A coated substrate was produced in the same manner as in Example 1, except that the fluoropolymer A was replaced with the fluoropolymer of Production Example 2.

Example 7: Substrate coated with commercially available fluoropolymer B/Novec 7300

A coated substrate was produced in the same manner as in Example 1, except that the fluoropolymer A was replaced with a commercially available fluoropolymer (also referred to as "fluoropolymer B"; Mw: 229738) containing a monomer unit represented by the following formula (10) and a monomer unit represented by the following formula (20) in a molar ratio of 65:35.

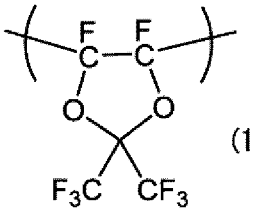
(10)

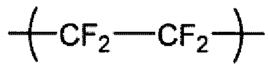
(20)

Example 8: Production of free-standing films produced from solutions of fluoropolymer A dissolved in various fluorinated solvents and measurement of transmittance

The fluoropolymer A obtained in Production Example 1 was dissolved in various fluorinated solvents to produce solutions having a fluoropolymer A concentration of 10 mass%. Each of the solutions was applied and air-dried by a casting method on a melt fluororesin FEP film to produce a free-standing film with a thickness of 200 μm. The total light transmittance of the film was measured. The total light transmittance obtained when FC-770, PFBz, Novec 7100, Novec 7200, and Novec 7300 were individually used as a fluorinated solvent was respectively 94%, 93%, 91%, 94%, and 95%.

Comparative Example 1: Substrate coated with fluoropolymer solution (Rf(C8) acrylate homopolymer/AsahiClean AK-225)

A coated substrate was produced in the same manner as in Example 1, except that the fluorinated polymer A and the fluorinated solvent were respectively replaced with the Rf(C8) acrylate homopolymer obtained in Comparative Production Example 1 and Asahi Clean AK-225 (produced by AGC Corporation), and the heat treatment temperature was changed to 75°C. Measurement of the total light transmittance of the free-standing film in the same manner as in Example 8 showed that the total light transmittance was 92%.

Comparative Example 2: Super-water-repellent uneven surface; substrate with UV-cured coating film of multifunctional acrylate and silica fine particle copolymer treated with Rf(C6)methacrylate/methacryloylpropyltrimethoxysilane

The UV-cured coating film of multifunctional acrylate and silica fine particle copolymer treated with Rf(C6)methacrylate/methacryloylpropyltrimethoxysilane described in Example 6 of WO2017/179678 was produced on an aluminum substrate. The surface roughness Ra was 14.7 μm. Measurement of the total light transmittance of the free-standing film in the same manner as in Example 8 showed that the free-standing film was completely clouded, and the total light transmittance was 0%. The coating film was produced as follows.

Preparation of copolymer solution of Rf(C6)methacrylate and fine particles

25.46 g of $C_6F_{13}CH_2CH_2OCOC(CH_3)=CH_2$ (also referred to as "Rf(C6) methacrylate"), 12.70 g of silica fine particles having an average primary particle size of 12 nm and having a radically reactive group on the surface, and 663.49 g of perfluorobutyl ethyl ether were placed in a side-arm test tube. The test tube was purged with nitrogen and heated to 70°C. Further, 1.26516 g of AIBN was added thereto and a reaction was conducted for 6 hours. After polymerization, the solids concentration was calculated.

Preparation of photosensitive solution

0.4015 g of trimethylolpropane triacrylate (TMPTA), 0.0403 g of alkylphenone photoinitiator, 1.10668 g of IPA, and 8.8769 g of perfluorobutyl ethyl ether were placed in a vial and irradiated with ultrasonic waves by using an ultrasonic washing machine, and 9.7518 g of a copolymer solution having a solids content of 4.19% was added. The resulting mixture was irradiated with ultrasonic waves by using an ultrasonic washing machine to produce a photosensitive solution.

Production of coating film

An aluminum substrate (3 cm × 3 cm) was treated with the photosensitive solution by a dip method. The treated aluminum substrate was then placed in a metal box in which gas can flow, and nitrogen was allowed to flow in the box at a flow rate of 10 L/min for 3 minutes. The whole box was then placed in a belt-conveyor UV irradiation device and irradiated with ultraviolet rays at 1,800 mJ/$cm^2$. The fluorine atom content of the produced coating film was 41.5 mass%, based on all the coating film components.

Water slidability test 1

The water slidability of the coated substrates produced in Examples 1 to 7 and Comparative Example 1 was tested according to the evaluation method of the present disclosure. Specifically, the test was conducted as follows.

The sliding velocity (SVs24) on a film of each substrate was measured.

Subsequently, the substrate was immersed in water at a temperature adjusted to 20°C and 25°C for 24 hours, and the sliding velocity (SVw24) on the film was measured immediately after the substrate was removed from the water.

Next, the substrate after the immersion treatment was dried in an atmosphere of 20°C to 25°C for 4 days, after which the sliding velocity (SVd24) on the film was measured.

Finally, the substrate after the drying treatment was placed on a hot plate set to 180°C so that the substrate was heated with its coated surface facing downwards and heated for 10 minutes, after which the sliding velocity (SVra24) on the film was measured.

The 24-hour water score was calculated from the obtained sliding velocities and equation (F). For example, in a set of 24-hour immersion measurements in Example 1, SVs24 was 176 (mm/s), SVw24 was 85 (mm/s), SVd24 was 112 (mm/s), and SVra24 was 171 (mm/s); accordingly, the water score is calculated from equation (F) as $100 \times [(85/176)+(112/176)+(171/176)] = 210$.

The 24-hour water score is shown in Table 1.

The 72-hour water score was calculated in the same manner except that the substrate was changed to a new one, the immersion time was changed to 72 hours, and the drying time was changed to 3 days. The 72-hour water score is shown in Table 1.

Further, the 120-hour water score was calculated in the same manner except that the substrate was changed to a new one, the immersion time was changed to 120 hours, and the drying time was changed to 7 days. The 120-hour water score is shown in Table 1.

The total water score was calculated by summing the 24-hour water score, the 72-hour water score, and the 120-hour water score. For example, the total water score of Example 1 was 210 + 153 + 8 = 371. The total water score is shown in Table 1.

Table 1

| | Polymer/ solvent | Surface roughness Ra (μm) | Initial contact angle (°) | Initial sliding angle (°) | Initial 5mm move-slide angle (°) | Initial sliding velocity SVs (mm/s) | | | Sliding velocity immediately after water immersion (mm/s) | | | Sliding velocity after airdrying SVd (mm/s) | | | Sliding velocity after heat treatment SVra (mm/s) | | | Water score | | | Total water score |
|---|---|---|---|---|---|---|---|---|---|---|---|---|---|---|---|---|---|---|---|---|---|
| | | | | | | Immersion time | | | Immersion time | | | Immersion time | | | Immersion time | | | Immersion time | | | |
| | | | | | | 24h | 72h | 120h | 24h | 72h | 120h | 24h | 72h | 120h | 24h | 72h | 120h | 24h | 72h | 120h | Total |
| Ex. 1 | Fluoropolymer A /FC-770 | 0.28 | 116.4 | 13 | 17 | 176 | 218 | 176 | 85 | 45 | 0 | 112 | 116 | 0 | 171 | 171 | 14 | 210 | 153 | 8 | 371 |
| Ex. 2 | Fluoropolymer A /PFBz | 0.27 | 115.2 | 11 | 19 | 162 | 180 | 162 | 77 | 14 | 0 | 92 | 32 | 0 | 204 | 166 | 16 | 230 | 117 | 10 | 357 |
| Ex. 3 | Fluoropolymer A/HFE7100 | 0.28 | - | - | - | 251 | 225 | 251 | 53 | 9 | 0 | 25 | 56 | 0 | 216 | 140 | 74 | 78 | 91 | 20 | 189 |
| Ex4 | Fluoropolymer A/HFE7200 | 0.28 | 116.3 | 6 | 16 | 188 | 190 | 188 | 80 | 10 | 0 | 127 | 132 | 0 | 199 | 178 | 0 | 215 | 169 | 0 | 384 |
| Ex. 5 | Fluoropolymer A/HFE7300 | 0.26 | - | - | - | 231 | 207 | 231 | 70 | 0 | 0 | 57 | 0 | 0 | 201 | 182 | 11 | 142 | 88 | 5 | 235 |
| Ex. 6 | Perfluoroaryl vinyl ether polymer/FC-770 | 0.29 | 111.8 | 10 | 20 | 156 | 173 | 178 | 72 | 0 | 0 | 20 | 0 | 0 | 150 | 128 | 0 | 140 | 74 | 0 | 214 |
| Ex. 7 | Fluoropolymer B/HFE7300 | 0.25 | 118.1 | 6 | 15 | 182 | 167 | 172 | 92 | Peeling of coating film | Peeling of coating film | 29 | Peeling of coating film | Peeling of coating film | 160 | Peeling of coating film | Peeling of coating film | 111 | 0 | 0 | 111 |
| Comp. Ex 1 | Rf(C8) acrylate homopolymer/AK-225 | 0.30 | 117.1 | 19 | 25 | 163 | 158 | 152 | 0 | 0 | 0 | 0 | 0 | 0 | 19 | 0 | 0 | 12 | 0 | 0 | 12 |

The total water score in each of the Examples was 100 or more, whereas the total water score of the Comparative Example, which was a fluoroacrylate polymer that had been conventionally used as a typical liquid repellent material, was as significantly low as 12.

Water slidability test 2

After 10 g of clay (red yellow soil, Mikatagahara, 5-μm diameter) was evenly adhered to the coated substrate of Example 5 and to the "substrate having a super-water-repellent uneven surface" in Comparative Example 2, a 5 cm × 5 cm aluminum plate was placed on each of the substrates, and the substrates were allowed to stand for 1 hour with a 1-kg load. After shaking off the clay on the substrates, the substrates were washed for 1 minute at a rate of 1 L of running water per minute, and dried at 20°C to 25°C for 1 day. Measurement of the sliding velocity showed that the sliding velocity of the coated substrate of Example 5 was 193 mm/s, whereas the water droplet did not slide on the "substrate having a super-water-repellent uneven surface".

## Claims

1. An antenna cover base material coated with a film comprising a fluoropolymer, the film having the following properties:

   a sliding velocity of 150 mm/s or more at an inclination angle of 30°; and
   an average surface roughness (Ra) of 1 μm or less.

2. The antenna cover base material according to claim 1, wherein the film further has the following property: a contact angle of 100° to 130°.

3. The antenna cover base material according to claim 1 or 2, wherein the film further has the following property: a total light transmittance of 90% or more.

4. The antenna cover base material according to any one of claims 1 to 3, wherein the film further has the following property: a sliding angle of 15° or less.

5. The antenna cover base material according to any one of claims 1 to 4, wherein the film has an average film thickness of 10 nm or more.

6. The antenna cover base material according to any one of claims 1 to 5, wherein the fluoropolymer has a glass transition temperature (Tg) of 100°C or more.

7. The antenna cover base material according to any one of claims 1 to 6, wherein the fluoropolymer contains as a main component a monomer unit containing a 4-, 5-, 6-, or 7-membered fluorine-containing aliphatic ring, and the fluorine-containing aliphatic ring contains one, two, or three etheric oxygen atoms as ring-constituting atoms; and when the fluorine-containing aliphatic ring contains a plurality of etheric oxygen atoms, the etheric oxygen atoms are not adjacent to each other.

8. The antenna cover base material according to any one of claims 1 to 7, wherein the fluoropolymer contains, as a main component, a monomer unit represented by formula (1):

   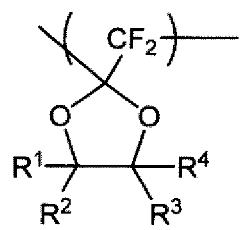

   (1)

   wherein $R^1$ to $R^4$ are each independently fluorine, fluoroalkyl, or fluoroalkoxy.

9. The antenna cover base material according to any one of claims 1 to 8, wherein the film has a total water score of

100 or more in evaluation of water slidability of the film with the immersion time being set to 24 hours, 72 hours, and 120 hours, and the water temperature during immersion being set to 20°C to 25°C.

**10.** An antenna cover comprising the antenna cover base material of any one of claims 1 to 9.

**11.** A coating agent for coating an antenna cover base material, the coating agent comprising a fluoropolymer and an aprotic solvent, and the fluoropolymer containing as a main component a monomer unit containing a 4-, 5-, 6-, or 7-membered fluorine-containing aliphatic ring, wherein the fluorine-containing aliphatic ring of the fluoropolymer has one, two, or three etheric oxygen atoms as ring-constituting atoms; and when the fluorine-containing aliphatic ring contains a plurality of etheric oxygen atoms, the etheric oxygen atoms are not adjacent to each other.

**12.** The coating agent according to claim 11, wherein the fluoropolymer contains as a main component a monomer unit represented by formula (1):

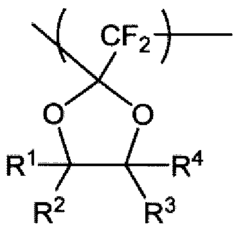

(1)

wherein $R^1$ to $R^4$ are each independently fluorine, fluoroalkyl, or fluoroalkoxy.

**13.** The coating agent according to claim 11 or 12, wherein the aprotic solvent is at least one solvent selected from the group consisting of perfluoroaromatic compounds, perfluorotrialkylamines, perfluoroalkanes, hydrofluorocarbons, perfluorocyclic ethers, and hydrofluoroethers.

**14.** The coating agent according to any of claims 11 to 13, wherein the aprotic solvent is at least one hydrofluoroether.

**15.** A method for evaluating water slidability of a film by immersing a base plate having one surface coated with the film, the method comprising the following steps as a set of measurements:

step A: a step of measuring the sliding velocity of water droplets on the film before immersing the base plate in water (SVs);
step B: a step of immersing the base plate in water for 1 to 240 hours and measuring the sliding velocity of water droplets on the film of the immersed base plate immediately after removing the base plate from water (SVw);
step C: a step of drying the immersed base plate at 10°C to 40°C for 12 hours to 7 days and measuring the sliding velocity of water droplets on the film of the dried base plate (SVd);
step D: a step of heating the dried base plate at 100°C to 200°C for 1 to 20 minutes and measuring the sliding velocity of water droplets on the film of the heated base plate (SVra); and
step F: a step of calculating the water score of the film according to the following mathematical formula (F):

$$\text{Water score} = 100 \times [(SVw/SVs) + (SVd/SVs) + (SVra/SVs)] \qquad (F);$$

wherein the set of measurements can be performed n times, wherein n is an integer or 1 or more, and when n is two or more, a new base plate is used for each set of measurements.

**16.** The method according to claim 15, wherein n is an integer of 2 or more, and the method further comprises step G: a step of calculating, as the total water score, the sum of the water scores calculated for each set of measurements from the first set to the $n^{th}$ set of measurements.

**17.** The method according to claim 15 or 16, wherein the set of measurements is performed 3 to 100 times, and the immersion time of at least three immersion treatments out of 3 to 100 immersion treatments performed in step B is 20 to 30 hours, 70 to 80 hours, and 100 to 140 hours.

## INTERNATIONAL SEARCH REPORT

International application No.
PCT/JP2020/041108

A. CLASSIFICATION OF SUBJECT MATTER
B32B 27/30(2006.01)i; C08F 301/00(2006.01)i; C09D 127/12(2006.01)i; C09D 7/20(2018.01)i; H01Q 1/02(2006.01)i; H01Q 1/42(2006.01)i; C08J 7/04(2020.01)i
FI: H01Q1/42; C09D127/12; C09D7/20; B32B27/30 D; C08F301/00; C08J7/04 Z CEZ; H01Q1/02
According to International Patent Classification (IPC) or to both national classification and IPC

B. FIELDS SEARCHED
Minimum documentation searched (classification system followed by classification symbols)
B32B27/30; C08F301/00; C09D127/12; C09D7/20; H01Q1/02; H01Q1/42; C08J7/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-335112 A (TOSHIBA CORP.) 22 November 2002 (2002-11-22) entire text, all drawings | 1-17 |
| A | JP 2005-072695 A (HITACHI KOKUSAI ELECTRIC INC.) 17 March 2005 (2005-03-17) entire text, all drawings | 1-17 |
| A | WO 2017/122616 A1 (SUMITOMO CHEMICAL CO., LTD.) 20 July 2017 (2017-07-20) entire text, all drawings | 1-17 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 January 2021 (25.01.2021) | 009 February 2021 (09.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/041108

| Patent Documents referred in the Report | Publication Date | Patent Family | Publication Date |
|---|---|---|---|
| JP 2002-335112 A | 22 Nov. 2002 | (Family: none) | |
| JP 2005-072695 A | 17 Mar. 2005 | (Family: none) | |
| WO 2017/122616 A1 | 20 Jul. 2017 | US 2019/0048229 A1 entire text, all drawings<br>CN 108463491 A entire text, all drawings<br>KR 10-2018-0100666 A entire text, all drawings | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017179678 A


### Non-patent literature cited in the description


- Dynamic Liquid Repellency of Fluoroacrylate Homopolymers. *Polymer,* 2011, vol. 60 (12), 870-871
- Method for Evaluating Water Repellency. *Koyo Fukuyama, Surface Technology,* 2009, vol. 60 (1), 21-26
- Midpoint Glass Transition Temperature (Tmg). *JIS K7121,* 2012